# FASCICULE DE BREVET EUROPEEN

(11) **EP 3 045 392 B1**
(45) Date de publication et mention de la délivrance du brevet: **15.11.2017**
(21) Numéro de dépôt: 16150820.5
(22) Date de dépôt: 11.01.2016
(51) Int. Cl.: B64F 1/02

(54) **DISPOSITIF D'ATTERRISSAGE POUR DRONE**
LANDEVORRICHTUNG FÜR DROHNE
LANDING DEVICE FOR DRONE

(30) Priorité: 14.01.2015 FR 1500079
(43) Date de publication de la demande: 20.07.2016
(73) Titulaire: NEXTER Systems, 42328 Roanne (FR)
(72) Inventeur: Bertrand, Ludovic, 18023 BOURGES (FR); Capitaine, Arnaud, 18023 BOURGES (FR)
(74) Mandataire: Cabinet Chaillot

(56) Documents cités:
- WO-A1-2013/171735
- US-A1- 2008 156 932
- US-A1- 2009 224 097
- US-A1- 2009 294 584

## Description

Le domaine technique de l'invention est celui des dispositifs d'atterrissage pour drone. Les drones sont amenés à devoir atterrir sur des véhicules ce qui implique une grande précision de guidage dans les derniers mètres parcourus par le drone avant son contact avec le véhicule.

Une telle précision n'est pas facilement atteignable par les moyens propres du drone, c'est pour cela qu'il existe des dispositifs aptes à récupérer le drone et à forcer son atterrissage dans une zone maitrisée située sur le véhicule. Le document WO2013/171735 A1 divulgue les caractéristiques du préambule de la revendication 1. Le brevet US20090224097 divulgue un moyen de récupération d'un drone comportant une paire de mats parallèles articulés en site par l'une de leurs extrémités relativement à une plateforme d'atterrissage. Les autres extrémités des mats sont reliées par un câble. Ce câble permet la capture d'un drone en vol par accrochage. L'articulation en site des mats permet ensuite d'abaisser les mats pour conduire progressivement le drone vers la plateforme d'atterrissage.

Afin de maximiser les chances d'accrocher le drone l'espace entre les mats est le plus large possible. Une fois le drone capturé, un tel dispositif est très imprécis quant à la position transversale du drone entre les mâts, ce qui implique d'avoir une plateforme d'atterrissage couvrant tout l'écartement entre les mats.

L'invention propose de résoudre le problème d'encombrement dû à la plateforme d'atterrissage en proposant des moyens permettant de positionner précisément le drone entre les mats au moment de l'atterrissage.

Ainsi, l'invention porte sur un dispositif d'aide à l'atterrissage d'un drone sur une plateforme, dispositif comportant une paire de mats parallèles entre eux et articulés en site au niveau de premières extrémités relativement à la plateforme, les secondes extrémités des mats étant reliées entre elles par au moins un brin de câble destiné à l'accrochage du drone, dispositif caractérisé en ce qu'il comporte au moins une paire de palets portés par le ou les brins de câble et pouvant être entraînés par un moyen de déplacement d'une première position où chaque palet est voisin de la seconde extrémité d'un mat vers une seconde position où les palets sont voisins l'un de l'autre et positionnés sensiblement à mi-distance des secondes extrémités des mats.

Avantageusement, le dispositif comporte deux brins de câble s'étendant entre les extrémités des deux mats, les brins sont solidaires et forment un seul et même câble passant d'un mat vers l'autre via des poulies situées aux extrémités de chaque mat, chaque palet étant solidaire d'un brin différent du câble.

Selon un mode de réalisation, le moyen de déplacement comporte une bobine motorisée apte à enrouler ou dérouler le câble sur les poulies.

Avantageusement, le pilotage de la bobine motorisée est corrélé à l'inclinaison des mats.

Selon un mode de réalisation, le moyen de déplacement des palets comporte le câble dont la première et la seconde extrémités sont solidaires du dispositif en un premier point d'attache et un second point d'attache fixes par rapport à la plateforme, le second point d'attache étant situé sensiblement à la même hauteur que la plateforme ou bien en dessous de celle-ci, et, lorsque les mats sont en position verticale, la distance entre le centre de la plateforme et les brins reliant les mats correspond sensiblement à la moitié de la distance D séparant les palets, le premier brin portant le premier palet au voisinage du premier mat et le second brin portant le second palet au voisinage du second mat, les positions des points d'attache par rapport au second mat et à l'articulation étant choisies de telle sorte que l'extrémité du second mat décrive un cercle ayant un rayon sensiblement égal à celui du cercle osculateur à l'ellipse ayant pour foyer les points d'attache et passant par l'extrémité du second mat, de façon à éviter tout coincement du dispositif lors du mouvement du second mat.

Selon un mode de réalisation, le moyen de déplacement comporte une motorisation solidaire de chaque palet.

Avantageusement, le pilotage du moyen de déplacement est corrélé à l'inclinaison des mats.

Le câble pourra comporter un moyen élastique destiné à permettre l'allongement du câble.

L'invention sera mieux comprise à la lumière de la description suivante, description faite en référence aux dessins annexés, dessins dans lesquels :
La figure 1 représente une vue schématique d'un dispositif selon l'invention au moment de l'accrochage d'un drone.
La figure 2 représente une vue schématique d'un dispositif selon l'invention durant la descente du dispositif.
La figure 3 représente une vue schématique d'un dispositif selon l'invention au moment de l'atterrissage d'un drone.
La figure 4 représente une vue schématique d'un dispositif selon un second mode de réalisation de l'invention au moment de l'accrochage d'un drone.
La figure 5 représente une vue schématique d'un dispositif selon un autre mode de réalisation de l'invention au moment de l'accrochage d'un drone.
La figure 6 représente une vue schématique latérale d'un dispositif selon l'invention durant la descente du dispositif.

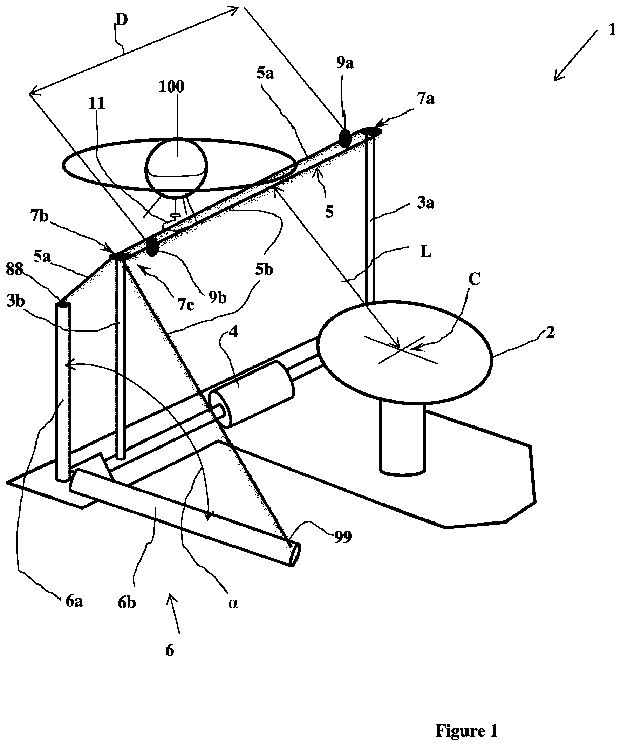

Selon la figure 1, un dispositif d'atterrissage 1 pour drone 100 comporte une plateforme d'atterrissage 2 ainsi qu'une paire de mats 3a et 3b parallèles entre eux. Les premières extrémités ou extrémités inférieures des mats 3a et 3b sont solidaires d'une articulation 4 permettant de faire pivoter les mats 3 en site, vers la plateforme 2. Le mouvement d'abaissement et de relevage des mats 3a et 3b sera obtenu par l'intermédiaire d'un moyen moteur non représenté et classiquement connu de l'Homme du Métier tel qu'un vérin ou une motorisation électrique. On pourra par exemple prévoir un moteur électrique disposé au niveau du bloc rectangulaire correspondant à l'articulation 4 sur les figures.

Les secondes extrémités ou extrémités supérieures des mats 3a et 3b, tels qu'ils sont positionnés à la figure 1, sont reliées par une paire de brins 5a et 5b parallèles sur leur longueur. Les deux brins 5a et 5b sont solidaires l'un de l'autre et forment un seul et même câble 5 passant d'un mat 3a vers l'autre mat 3b via des poulies 7a,7b,7c situées aux extrémités de chaque mat.

Les extrémités libres du câble 5 sont solidaires des extrémités de deux tiges : une première tige 6a et une seconde tige 6b. Le premier brin 5a est ainsi relié à la première tige 6a la plus orientée vers la verticale alors que le second brin 5b est relié à l'extrémité de la seconde tige 6b, la plus orientée vers l'horizontale. Les tiges 6a et 6b forment entre elles un angle α et elles sont fixes relativement à la plateforme 2. Le câble 5 chemine entre les mats 3a et 3b via des poulies 7a, 7b et 7c afin de permettre la translation des brins 5a et 5b du câble 5 entre les mats 3a et 3b. Le premier mat 3a comporte une première poulie 7a (dite poulie de retour) qui permet le retour du câble 5 venant du second mat 3b vers ce même second mat 3b après un passage à l'extrémité du premier mat 3a.

Le second mat 3b comporte une seconde poulie 7b et une troisième poulie 7c qui sont destinées à servir de renvoi d'angle des brins 5a et 5b provenant respectivement des tiges 6a et 6b et passant par l'extrémité du second mat 3b jusque vers le premier mat 3a.

Ainsi le câble 5 a une première extrémité fixée à la première tige 6a, ce câble passe ensuite au niveau de la seconde poulie 7b solidaire du second mat 3b, puis il rejoint la première poulie 7a fixée au premier mat 3a. Il rejoint ensuite la troisième poulie 7c solidaire du second mat 3b qui renvoie le câble 5 vers l'extrémité de la seconde tige 6b.

Le premier brin 5a du câble 5 porte un premier palet 9a qui est situé au voisinage du premier mat 3a quand les mats 3 sont verticaux. Le second brin 5b du câble 5 porte un second palet 9b qui est situé au voisinage du second mat 3b quand les mats 3 sont verticaux. Chaque palet 9a et 9b comporte une plaque sensiblement perpendiculaire à son brin porteur (plaque non visible sur la figure).

Avec une telle configuration du dispositif 1, le drone 100 a toute latitude pour venir s'accrocher en n'importe quel point du câble 5 situé entre les deux mats 3a et 3b. Le crochet 11 du drone 100 sera de fait situé entre les palets 9a et 9b. Préférentiellement les palets 9a et 9b comporteront un aimant destiné à adhérer avec un crochet 11 magnétique du drone 100 afin d'améliorer les capacités d'accrochage du dispositif 1.

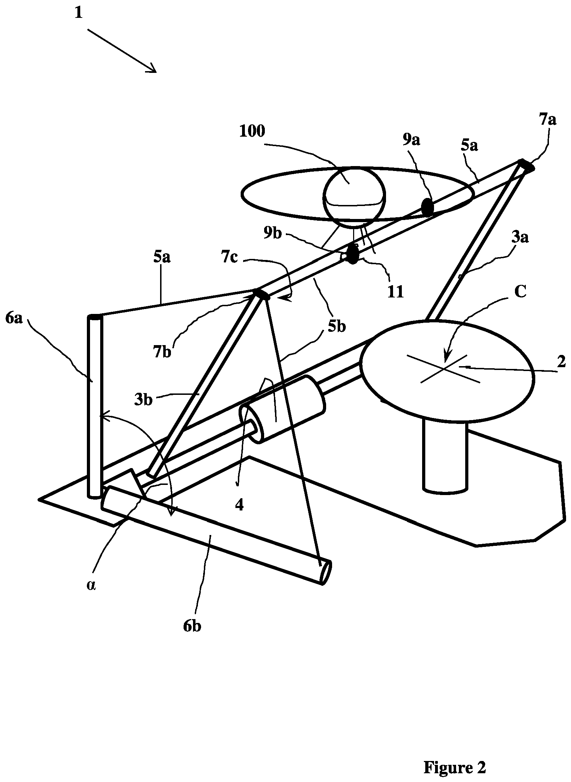

Lors de l'abaissement des mats 3 tel que représenté à la figure 2, le câble 5 est mis en légère tension au niveau de l'extrémité du premier brin 5a qui est relié à la première tige 6a du fait du frottement du câble 5 dans les poulies 7a et 7b. Ce faisant, relativement aux mats 3a et 3b le câble 5 va se translater entre les mats 3a et 3b et les palets 9a et 9b vont se rapprocher l'un de l'autre.

Le crochet 11 du drone 100 situé entre les deux palets 9a et 9b va entrer en contact avec l'un des palets 9a ou 9b et être guidé en translation par ce palet 5a ou 5b le long du câble 5 et être amené progressivement vers le milieu de la distance séparant les mats 3a et 3b.

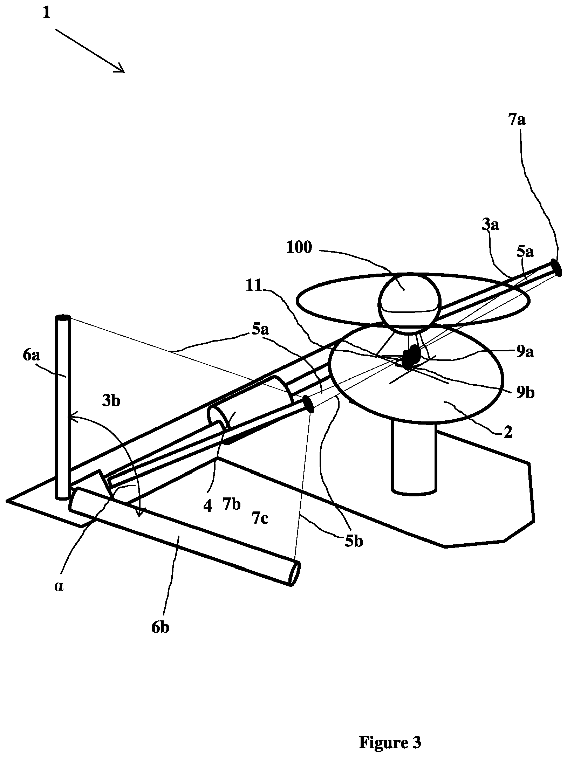

Au terme de l'abaissement des mats 3a et 3b, tel que visible à la figure 3, les palets enserrent le crochet 11 de part et d'autre de celui-ci et l'ensemble palets 9a, 9b et crochet 11 est précisément positionné sur le centre C de la plateforme 2. Dans la présente invention on définit le centre C de la plateforme comme un point de la plateforme 2 qui est situé au niveau du milieu du segment de câble 5 touchant la plateforme lorsque ce dernier est en contact avec la plateforme 2. Le drone 100 est ainsi posé avec exactitude sur une aire réduite à la seule surface nécessaire à son appui au sol ce qui résout le problème d'encombrement nécessaire de la plateforme de l'art antérieur. Il est donc possible de réaliser une plateforme 2 de dimensions réduites.

En outre l'invention selon ce mode de réalisation permet aussi d'améliorer l'art antérieur sans complexifier le dispositif par l'ajout de motorisations annexes.
les tiges 6a et 6b en association avec les poulies 7a,7b et 7c et le câble 5 forment un moyen de déplacement 6. Les tiges 6a et 6b comportent respectivement à leur extrémité un premier point d'attache 88 et un second point d'attache 99 servant à fixer respectivement la première et la seconde extrémité du câble 5.

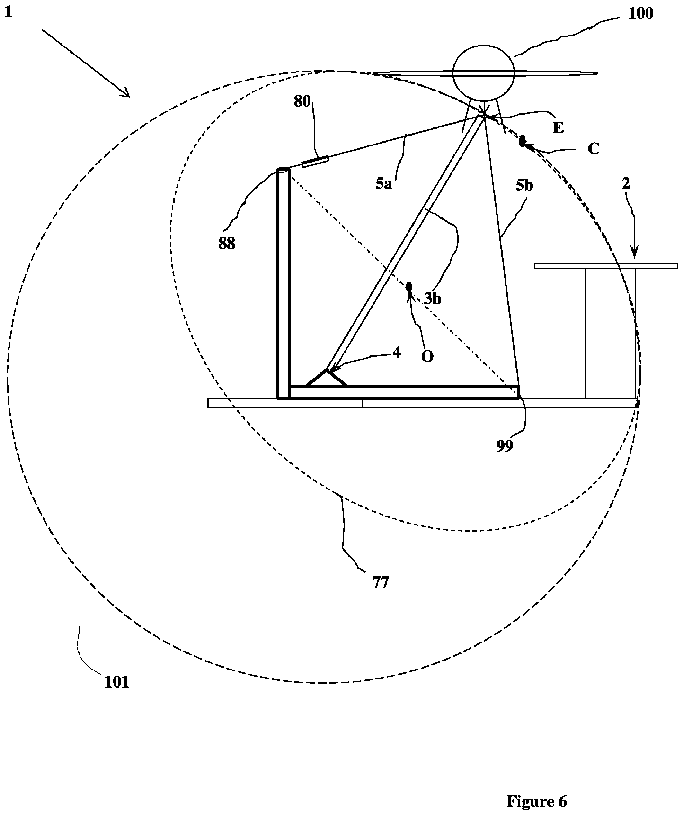

Comme visible à la figure 6, les points d'attache 88 et 99 sont les foyers d'une ellipse 77 définie par le fait que chacun des points de cette ellipse 77 est tel que la somme des longueurs des brins 5a et 5b situés entre les points d'attache 88 et 99 et l'extrémité E du second mat 3b est constante. L'extrémité E du second mat 3b décrit quant à elle un cercle 101 centré sur l'articulation 4.

Le câble 5 étant non extensible, il est nécessaire, pour éviter tout blocage lors du mouvement du mat, de positionner les points d'attache 88 et 99 par rapport au mat 3b et à l'articulation 4 de telle sorte que la trajectoire circulaire parcourue par l'extrémité E du mat 3b soit la plus proche possible de la trajectoire elliptique ayant pour foyer les points d'attache 88 et 99 et passant par l'extrémité E du mat. Un tel résultat est obtenu en donnant au mat 3b une longueur qui soit la plus proche possible du rayon du cercle 101 osculateur à l'ellipse ayant le rayon maximal, c'est à dire le cercle osculateur situé au niveau du point où le rayon de courbure de l'ellipse est maximal (soit au niveau du point C de l'ellipse en regard du centre O de celle-ci, centre situé à mi-distance des foyers 88 et 99). On rappelle que le cercle osculateur à une courbe est le cercle tangent à la courbe et ayant pour rayon le rayon de courbure de la courbe au point considéré. Le fonctionnement correct du dispositif 1 sera obtenu pour un déplacement de l'extrémité E du bras 3b limité à la demi ellipse 77 située du côté tangent avec la trajectoire circulaire 101 du bras 3b.

L'Homme du Métier définira donc la géométrie de l'ensemble en écartant suffisamment les foyers (donc les points d'attache 88 et 99) pour que la course du mat 3b soit possible pour toute l'amplitude souhaitée entre la verticale et la plateforme, et en localisant également l'articulation 4 par rapport aux foyers de façon à faire parcourir par l'extrémité E du mat 3b le cercle 101 osculateur ou un cercle tangent de rayon très proche de celui du cercle osculateur.

La mise en place d'un moyen élastique 80 sur le câble 5 permet par ailleurs un léger allongement du câble qui permet de pallier aux écarts minimes entre la trajectoire circulaire 101 de l'extrémité E du mat 3b et le profil de l'ellipse 77 imposé par la présence du câble. Si pour un dispositif donné, l'écart entre l'ellipse 77 et le cercle osculateur 101 est très faible, il peut être absorbé par la seule élasticité du câble 5 ou du dispositif 1. En outre le moyen élastique 80 permet aussi d'amortir le mouvement du drone 100 durant son accrochage.

Le second point d'attache 99 est situé sensiblement à la même hauteur que la plateforme 2 ou en dessous de celle-ci. Lorsque les mats 3a et 3b sont en position verticale telle qu'à la figure 1, la distance L séparant les brins 5a et 5b du centre C de la plateforme 2 est équivalente à la moitié de la distance D séparant les palets 9a et 9b. On notera que le premier brin 5a porte le premier palet 9a au voisinage du premier mat 3a et le second brin 5b porte le second palet 9b au voisinage du second mat 3b. La distance D est donc sensiblement égale à la distance entre les extrémités des mats 3a et 3b.

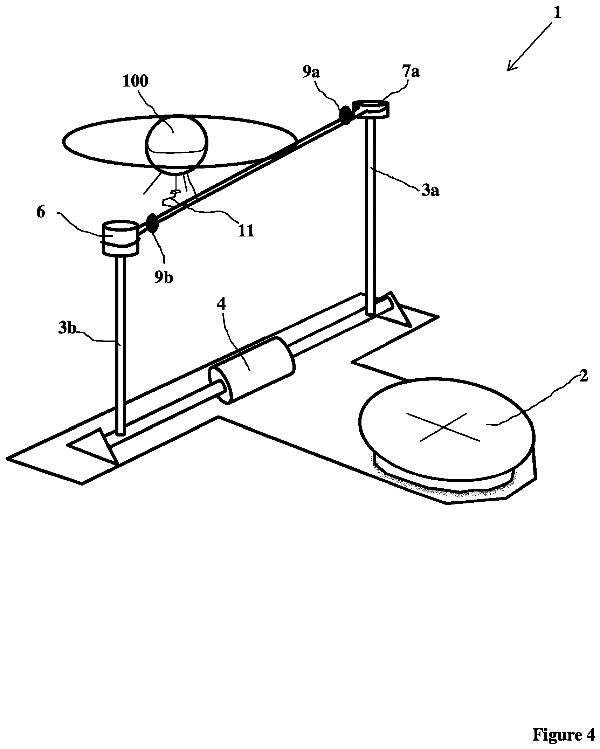

Selon le mode de réalisation de la figure 4, l'extrémité d'un des mats 3a porte un moyen de déplacement 6 qui est constitué par une motorisation électrique 6. L'extrémité supérieure de l'autre mat 3b comporte une poulie 7a. La motorisation 6 entraîne une bobine qui permet la mise en mouvement du câble 5 et par association, des palets 9a et 9b.

Ainsi, l'enroulement du premier brin 5a vers la motorisation 12 implique le déroulement du second brin 5b. Les palets 9a et 9b vont alors se rapprocher. Le mouvement de rapprochement des palets 9a et 9b est commandé lorsque le drone 100 est accroché. Cette commande pourra être faite par un observateur disposant d'un moyen de commande (moyen de commande et observateur non représentés) ou par la détection de la tension occasionnée par le drone sur le câble (détecteur de tension non représenté). On notera que dans ce mode de réalisation le moyen de déplacement 6 des palets 9a et 9b est indépendant de l'abaissement des mats 3a et 3b. Ainsi, l'abaissement des mâts 3a et 3b pourra être fait simultanément au rapprochement des palets 9a et 9b, ou bien une fois que les palets 9a et 9b auront enserré le crochet 11.

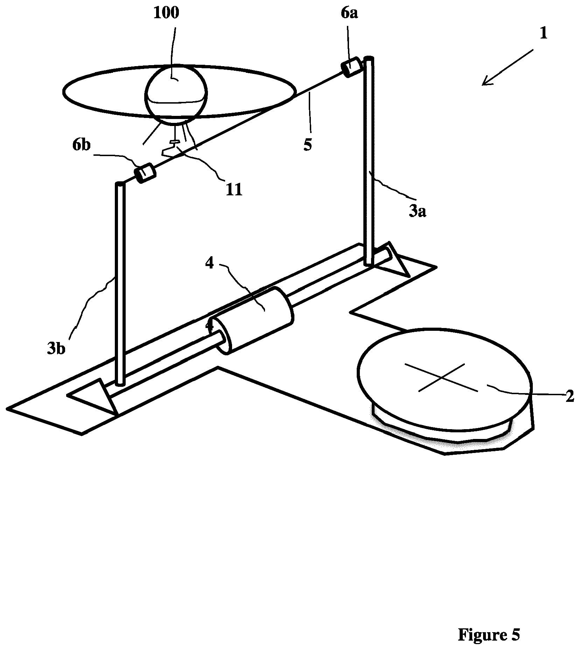

Selon le mode de réalisation de la figure 5, chaque palet 9a et 9b comporte un moyen de déplacement 6 qui comprend une motorisation indépendante 6a et 6b apte à faire se déplacer chaque palet 9a et 9b l'un vers l'autre sur un unique brin de câble 5.

De même que pour le mode de réalisation de la figure 4, l'abaissement des mats 3a et 3b pourra être fait en corrélation avec le rapprochement des palets 9a et 9b, ou bien une fois que les palets 9a et 9b auront enserré le crochet 11. Dans ces deux modes de réalisation, le crochet 11 et donc le drone 100 seront positionnés au milieu de la distance D séparant les mats 3a et 3b ce qui positionne très exactement le drone 100 sur la plateforme 2.

## Revendications

1. Dispositif (1) d'aide à l'atterrissage d'un drone (100) sur une plateforme (2), dispositif (1) comportant une paire de mats (3a, 3b) parallèles entre eux et articulés en site au niveau de premières extrémités relativement à la plateforme (2), les secondes extrémités des mats étant reliées entre elles par au moins un brin (5a, 5b) de câble (5) destiné à l'accrochage du drone (100), dispositif **caractérisé en ce qu'**il comporte au moins une paire de palets (9a, 9b) portés par le ou les brins (5a,5b) de câble (5) et pouvant être entraînés par un moyen de déplacement (6) d'une première position où chaque palet (9a, 9b) est voisin de la seconde extrémité d'un mat (3a,3b) vers une seconde position où les palets (9a,9b) sont voisins l'un de l'autre et positionnés sensiblement à mi-distance des secondes extrémités des mats (3a,3b).

2. Dispositif (1) selon la revendication 1, **caractérisé en ce qu'**il comporte deux brins (5a,5b) de câble (5) s'étendant entre les extrémités des deux mats (3a,3b), les brins (5a,5b) étant solidaires et forment un seul et même câble (5) passant d'un mat vers l'autre via des poulies (7a, 7b,7c) situées aux extrémités de chaque mat (3a,3b), chaque palet (9a,9b) étant solidaire d'un brin (5a,5b) différent du câble (5).

3. Dispositif selon la revendication 2, **caractérisé en ce que** le moyen de déplacement (6) comporte une bobine motorisée (6) apte à enrouler ou dérouler le câble (5) sur les poulies (7a,7b,7c).

4. Dispositif selon la revendication 3, **caractérisé en ce que** le pilotage de la bobine motorisée (6) est corrélé à l'inclinaison des mats (3a,3b).

5. Dispositif selon la revendication 2, **caractérisé en ce que** le moyen de déplacement (6) des palets (9a,9b) comporte le câble (5) dont la première et la seconde extrémités sont solidaires du dispositif (1) en un premier point d'attache (88) et un second point d'attache (99) fixes par rapport à la plateforme (2), le second point d'attache (99) étant situé sensiblement à la même hauteur que la plateforme (2) ou bien en dessous de celle-ci, et, lorsque les mats (3a,3b) sont en position verticale, la distance (L) entre le centre de la plateforme (2) et les brins (5a,5b) reliant les mats (3a,3b) correspond sensiblement à la moitié de la distance (D) séparant les palets (9a,9b), le premier brin (5a) portant le premier palet (9a) au voisinage du premier mat (3a) et le second brin (5b) portant le second palet (9b) au voisinage du second mat (3b), les positions des points d'attache (88, 99) par rapport au second mat (3b) et à l'articulation (4) étant choisies de telle sorte que l'extrémité du second mat (3b) décrive un cercle ayant un rayon sensiblement égal à celui du cercle osculateur à l'ellipse ayant pour foyer les points d'attache (88,99) et passant par l'extrémité (E) du second mat (3b), de façon à éviter tout coincement du dispositif lors du mouvement du second mat (3b).

6. Dispositif selon la revendication 1, **caractérisé en ce que** le moyen de déplacement (6) comporte une motorisation (6a,6b) solidaire de chaque palet (9a,9b).

7. Dispositif selon la revendication 6, **caractérisé en ce que** le pilotage du moyen de déplacement (6) est corrélé à l'inclinaison des mats (3a,3b).

8. Dispositif selon une des revendications 1 à 7, **caractérisé en ce que** le câble (5) comporte un moyen élastique (80) destiné à permettre l'allongement du câble (5).

## Patentansprüche

1. Landehilfevorrichtung (1) für eine Drohne (100) auf einer Plattform (2), wobei die Landehilfe (1) ein Paar Matten (3a, 3b) umfasst, parallel zueinander, die vor Ort auf Höhe erster Enden in Bezug auf die Plattform (2) angelenkt sind, wobei die zweiten Enden der Matten untereinander durch mindestens einen Strang (5a, 5b) von Kabeln (5) zur Ankupplung der Drohne (100) verbunden sind, wobei die Landehilfe **dadurch gekennzeichnet ist, dass** sie mindestens ein Paar Scheiben (9a, 9b) umfasst, die von dem oder den Strängen (5a, 5b) von Kabeln (5) getragen werden und die von einem Bewegungsmittel (6) aus einer erster Position, in der jede Scheibe (9a, 9b) an das zweite Ende einer Matte (3a,3b) angrenzt, in eine zweite Position mitgenommen werden können, in der die Scheiben (9a,9b) benachbart voneinander und im wesentlichen im halben Abstand von den zweiten Enden der Matten (3a,3b) positioniert sind.

2. Vorrichtung (1) nach Anspruch 1, **gekennzeichnet dadurch, dass** sie zwei Stränge (5a,5b) von Kabeln (5) umfasst, die sich zwischen den Enden der beiden Matten (3a,3b) erstrecken, wobei die Stränge (5a,5b) verbunden sind und ein einziges Kabel (5) bilden, das von einer Matte zu der anderen über Laufrollen (7a, 7b,7c) geht, die an den Enden jeder Matte (3a,3b) gelegene sind, wobei jede Scheibe (9a,9b) mit einem anderen Strang (5a,5b) des Kabels (5) verbunden ist.

3. Vorrichtung nach Anspruch 2, **gekennzeichnet dadurch, dass** das Bewegungsmittel (6) eine motorisierte Spule (6) umfasst, die fähig ist das Kabel (5) auf die Laufrollen (7a,7b,7c) auf- oder davon abzurollen.

4. Vorrichtung nach Anspruch 3, **gekennzeichnet dadurch, dass** die Steuerung der motorisierten Spule (6) mit der Neigung der Matten (3a,3b) korreliert ist.

5. Vorrichtung nach Anspruch 2, **gekennzeichnet dadurch dass** das Bewegungsmittel (6) für die Scheiben (9a,9b) das Kabel (5) umfasst, dessen erstes und zweites Ende mit der Vorrichtung (1) an einem ersten Befestigungspunkt (88) und einem zweiten Befestigungspunkt (99) verbunden sind, die fest im Vergleich zu der Plattform (2) sind, wobei der zweite Befestigungspunkt (99) im wesentlichen auf derselben Höhe wie die Plattform (2) liegt oder aber unterhalb letzterer, und, wenn die Matten (3a,3b) in senkrechter Position sind, entspricht der Abstand (L) zwischen der Mitte der Plattform (2) und den Stränge (5a,5b), die die Matten (3a,3b) verbinden, im wesentlichen der Hälfte des Abstandes (D), der die Scheiben (9a,9b) trennt, wobei der erste Strang (5a) die erste Scheibe (9a) in der Nähe der ersten Matte (3a) trägt und der zweite Strang (5b) die zweite Scheibe (9b) in der Nähe der zweiten Matte (3b) trägt und die Positionen der Befestigungspunkte (88,99) im Verhältnis zur zweiten Matte (3b) und an dem Gelenk (4) derart gewählt sind, dass das Ende der zweiten Matte (3b) einen Kreis mit einem Radius gleich dem des Krümmungskreises zu der Ellipse mit den Befestigungspunkten (88,99) als Brennpunkt beschreibt, und der durch das Ende (E) der zweiten Matte hindurchgeht (3b), um ein Einklemmen der Vorrichtung bei der Bewegung der zweiten Matte (3b) zu vermeiden.

6. Vorrichtung nach Anspruch 1, **gekennzeichnet dadurch, dass** das Bewegungsmittel (6) einen Motor (6a,6b) umfasst, der mit jeder Scheibe (9a,9b) verbunden ist.

7. Vorrichtung nach Anspruch 6, **gekennzeichnet dadurch, dass** die Steuerung des Bewegungsmittels (6) mit der Neigung der Matten (3a,3b) korreliert ist.

8. Vorrichtung nach einem der Ansprüche 1 bis 7, **gekennzeichnet dadurch, dass** das Kabel (5) ein elastisches Mittel (80) umfasst, um die Verlängerung des Kabels (5) zu gestatten.

## Claims

1. A device (1) for assisting the landing of a drone (100) on a platform (2), said device (1) comprising a pair of posts (3a, 3b) parallel to each other and hinged on elevation at first ends with respect to the platform (2), the second ends of the posts being connected to each other by at least one strand (5a,5b) of wire (5) for the hooking of the drone (100), said device **characterised in that** it comprises at least one pair of discs (9a, 9b) carried by the one or more strands (5a, 5b) of wire (5) and drivable by a moving means (6) from a first position where each disc (9a, 9b) is in the vicinity of the second end of a post (3a, 3b) to a second position where the discs (9a, 9b) are in the vicinity of one another and are located substantially halfway between the second ends of the posts (3a, 3b).

2. The device (1) according to claim 1, **characterised in that** it comprises two strands (5a, 5b) of wire (5) extending between the ends of both posts (3a, 3b), the strands (5a, 5b) being integral and forming a single wire (5) going from one post to the other via pulleys (7a, 7b, 7c) located at the ends of each post (3a, 3b), each disc (9a, 9b) being integral with a different strand (5a, 5b) of the wire (5).

3. The device according to claim 2, **characterised in that** the moving means (6) comprises a motorised reel (6) capable of winding or unwinding the wire (5) on the pulleys (7a, 7b, 7c).

4. The device according to claim 3, **characterised in that** the control of the motorised reel (6) is correlated with the tilting of the posts (3a, 3b).

5. The device according to claim 2, **characterised in that** the moving means (6) for moving the discs (9a, 9b) comprises the wire (5) the first and second ends of which are integral with the device (1) at a first attachment point (88) and at a second attachment point (99) which are fixed with respect to the platform (2), the second attachment point (99) being located substantially at the same height as the platform (2) or below it, and when the posts (3a, 3b) are in vertical position, the distance (L) between the center of the platform (2) and the strands (5a, 5b) connecting the posts (3a, 3b) substantially corresponds to half of the distance (D) separating the discs (9a, 9b), the first strand (5a) carrying the first disc (9a) at the vicinity of the first post (3a) and the second strand (5b) carrying the second disc (9b) at the vicinity of the second post (3b), the positions of the attachment points (88, 99) with respect to the second post (3b) and to the hinge (4) being selected such that the end of the second post (3b) describes a circle with a radius substantially equal to that of the osculating circle of an ellipse having as foci the attachment points (88, 99) passing through the end (E) of the second post (3b), so as to prevent any jamming of the device when moving the second post (3b).

6. The device according to claim 1, **characterised in that** the moving means (6) comprises a motorisation (6a, 6b) integral with each disc (9a, 9b).

7. The device according to claim 6, **characterised in that** the control of the moving means (6) is correlated with the tilting of the posts (3a,3b).

8. The device according to one of claims 1 to 7, **characterised in that** the wire (5) comprises an elastic means (80) for allowing the extension of the wire (5).
